# EUROPÄISCHE PATENTSCHRIFT

(11) **EP 3 022 106 B1**
(45) Veröffentlichungstag und Bekanntmachung des Hinweises auf die Patenterteilung: **17.01.2018**
(21) Anmeldenummer: 14738522.3
(22) Anmeldetag: 11.07.2014
(51) Int. Cl.: B62D 3/12

(54) **LENKUNGSSYSTEM MIT VERBESSERTER ANORDNUNG VON STÜTZLAGER UND FALTENBALG**
STEERING SYSTEM WITH AN IMPROVED ARRANGEMENT OF SUPPORTING BEARING AND BELLOWS
SYSTÈME DE DIRECTION DOTÉ D'UN MEILLEUR AGENCEMENT DU PALIER D'APPUI ET DU SOUFFLET

(30) Priorität: 16.07.2013 DE 102013107566
(43) Veröffentlichungstag der Anmeldung: 25.05.2016
(73) Patentinhaber: Tedrive Steering Systems GmbH, 42489 Wülfrath (DE)
(72) Erfinder: MÜLLER, Jens-Hauke, 42553 Velbert-Neviges (DE); LÜBSDORF, Mario, 42489 Wülfrath (DE); KIRSCHBAUM, Sven, 40822 Mettmann (DE)
(74) Vertreter: Patentanwälte Bauer Vorberg Kayser
(86) Internationale Anmeldenummer: PCT/EP2014/064962
(87) Internationale Veröffentlichungsnummer: WO 2015/007655

(56) Entgegenhaltungen:
- DE-A1- 4 220 417
- FR-A1- 2 573 496
- FR-A5- 2 199 717
- GB-A- 1 242 813
- US-A1- 2008 031 682

## Beschreibung

Die Erfindung betrifft eine Anordnung der Lenkstange eines Kraftfahrzeugs gemäß Anspruch 1 und das Lenksystem eines Kraftfahrzeugs aufweisend eine solche Anordnung ein Lenkungssystem eines Kraftfahrzeugs sowie ein zugehöriges Lenkgetriebe. Lenkgetriebe weisen ein im Wesentlichen rohrförmiges Lenkgehäuse, eine in dem Lenkgehäuse mittels wenigstens mehrerer Stützlager verschiebbar geführte Lenkstange sowie in der Regel ein Getriebe, um über dessen Getriebeeingriff eine rotierende Lenkbewegung in eine axiale Bewegung der Lenkstange zu bewirken, auf. Lenkgetriebe werden bei Kraftfahrzeugen eingesetzt, um die über das Lenkrad aufgebrachte drehende Lenkbewegung in eine geradlinige Bewegung zum Verschwenken der zu lenkenden Fahrzeugräder umzuwandeln. Zur Lenkkraftunterstützung kann hierbei ein Servoantrieb zum Einsatz kommen, der an geeigneten Stellen innerhalb des Lenkkraftflusses angeordnet werden kann.

Übliche Lenkgetriebe, wie etwa aus der Offenlegungsschrift DE 42 20 417 A1 bekannt, sind als sogenannte Zahnstangenlenkung ausgelegt. Bei der Zahnstangenlenkung ist das Ende der Lenksäule mit einem Ritzel verbunden, weiches in die Verzahnung der Lenkstange, die dann auch Zahnstange genannt wird, eingreift und diese beim Drehen der Lenkung seitlich verschiebt. An beiden Enden der Zahnstange ist jeweils eine Spurstange über ein Kugelgelenk angeschlossen. Der einfache Aufbau hat für die große Verbreitung der Zahnstangenlenkung gesorgt. Zahnstangenlenkungen haben eine gute Rückmeldung und ein sehr gutes Rückstellvermögen. Es ist aus der DE 42 20 417 A1 bekannt, die Lenkstange elastisch im Gehäuse zu lagern, beispielsweise durch zwischen dem Stützlager und der Lenkstange angeordnete elastische Komponenten. Ferner ist es aus der DE 42 20 417 A1 bekannt den verbleibenden offenen Zwischenraum zwischen Lenkstange und Lenkgehäuse an der Öffnung des Lenkgehäuses durch einen sogenannten Faltenbalg abzudecken oder gar abzudichten. Faltenbalg bezeichnet ein elastisches, sich "ziehharmonikaartig" zusammenfaltendes Schlauchgebilde aus Gummi oder Kautschuk zum Schutz der sich in das Lenkgehäuse schiebenden Lenkstange und des Lenkgehäuseinneren und wird angebracht, um sie vor Fremdeinflüssen, insbesondere Verschmutzung zu schützen und gegenüber der Umgebung abzudichten. Generell besteht das Bedürfnis bei Lenksystemen aus Gewichts- und Kostengründen Komponenten einzusparen.

Die Aufgabe der vorliegenden Erfindung besteht somit darin, den Montageaufwand, die Kosten, das Bauvolumen und/oder das Gewicht für ein Lenkungssystem zu reduzieren und dabei trotzdem eine zuverlässige elastische Lagerung der Lenkstange zu erreichen. Diese Aufgabe wird durch eine Anordnung der Lenkstange eines Kraftfahrzeugs gemäß Anspruch 1, ein Lenkungssystem gemäß Anspruch 9 sowie eine Verwendung des Anspruchs 10 gelöst. Vorteilhafte Ausgestaltungen sind jeweils Gegenstand der abhängigen Ansprüche. Die Beschreibung, insbesondere im Zusammenhang mit den Figuren, charakterisiert und spezifiziert die Erfindung zusätzlich.

Die erfindungsgemäße Anordnung umfasst ein ein- oder mehrteiliges Lenkgehäuse. Erfindungsgemäß ist ferner eine sich durch einen Durchbruch im Lenkgehäuse erstreckende Lenkstange vorgesehen Lenkstange im Sinne meint im Wesentlichen stangenförmiges Bauteil, welches dazu dient, durch dessen im Wesentlichen lineare Verschiebebewegung eine Schwenkbewegung wenigstens eischwenkbeweglichen Rades zu bewirken. Zur Lagerung der Lenkstange im Lenkgehäuse ist wenigstens ein im oder am Lenkgehäuse angeordnetes Stützlager vorgesehen. Erfindungsgemäß ist wenigstens ein elastischer Faltenbalg vorgesehen, um die Lenkstange außerhalb des Lenkgehäuses abzudecken. Beispielsweise ist der Faltenbalg vorgesehen, eine sich durch den Durchbruch ergebende und zwischen Lenkgehäuse und Lenkstange verbleibende Öffnung, nach außen abzudecken, zu erschließen und/oder gar abzudichten. Erfindungsgemäß umfasst das Stützlager ferner Mittel zur radial nach innen gerichteten, elastischen Abstützung der Lenkstange. Die Erfindung zeichnet sich dadurch aus, dass diese vorgenannten Mittel durch den Faltenbalg und/oder ein den Faltenbalg umgebendes Spannmittel gegen die Lenkstange vorgespannt werden. Anders ausgedrückt der elastische Faltenbalg und/oder ein Spannmittel wird in die elastische Abstützung der Lenkstange mit einbezogen. Dies hat den Vorteil, dass die Zuverlässigkeit und Haltbarkeit gesteigert werden kann und ferner Komponenten und damit Gewicht eingespart werden kann. Der Faltenbalg ist beispielsweise aus Kautschuk oder Gummi hergestellt.

Bevorzugt umfassen die Mittel zur radial nach innen gerichteten, elastischen Abstützung parallel oder schräg zum Axialverlauf der Lenkstange verlaufende Finger. Beispielsweise liegt der Betrag des Winkels, unter dem der Fingerverlauf den Axialverlauf schneidet, im Bereich von 0 bis 20° bevorzugt im Bereich von 0 bis 10°. Die Finger sind beispielsweise aus Kunststoff hergestellt. Beispielsweise sind mehrere sich über den Umfang der Lenkstange kranzartig verteilende Finger vorgesehen. Beispielsweise liegt die Feder jeweils mit ihrem freien Ende an der Lenkstange an.

Gemäß einer bevorzugten Ausgestaltung ist das Stützlager im Wesentlichen ringförmig.

Gemäß einer weiteren vorteilhaften Ausgestaltung ist der Stützlager aus Kunststoff gefertigt.

Bei einer vorteilhaften Ausgestaltung sind das Stützlager und die Mittel zur radial nach innen gerichteten, elastischen Abstützung der Lenkstange einstückig ausgebildet. Dadurch kann u.a. die Kompenentenanzahl verringert werden. Beispielsweise sind der Stützring und die Mittel zur radial nach innen gerichteten, elastischen Abstützung der Lenkstange aus ein und demselben Kunststoff in einem formgebenden Verfahrensschritt, wie einem Spritzgussverfahren, hergestellt
Gemäß einer weiteren vorteilhaften Ausgestaltung sind das Stützlager und das Lenkgehäuse einstückig ausgebildet. Beispielsweise sind Teile des Lenkgehäuses und das Stützlager einstückig aus ein und demselben Kunststoff in einem formgebenden Verfahrensschritt, wie einem Spritzgussverfahren, hergestellt.

Bevorzugt ist das Spannmittel ein Spannring, wie eine Ringfeder oder eine Spannschelle. Beispielsweise ist der Spannring so angeordnet, dass er über den Faltenbalg auf die freien Enden der Finger einwirkt, so dass diese an der Lenkstange anliegen.

Gemäß einer weiteren vorteilhaften Ausgestaltung ist vorgesehen, dass die Mittel zur radial nach innen gerichteten, elastischen Abstützung der Lenkstange der Festlegung des Faltenbalgs in axialer Richtung dienen. Beispielsweise sind Mittel zur Bewirkung eines Formschlusses zwischen dem Faltenbalg und den Fingern vorgesehen, wie eine umlaufende Nut-Feder Verbindung zwischen dem Faltenbalg und den Fingern. Dadurch können Mittel entfallen, die der Befestigung bzw. Festlegung des Faltenbalgs am Lenkgehäuse dienen.

Bei einer weiteren vorteilhaften Ausgestaltung bildet der Faltenbalg ferner eine Anschlagsfläche zur Beanschlagung der Verschiebebewegung der Lenkstange aus. Beispielsweise weist der Faltenbalg eine ringförmige Anschlagsfläche für das Kugelgelenkgehäuse des zwischen Lenkstange und Lenkhebel befindlichen Kugelgelenks auf. Besonders bevorzugt ist vorgesehen, dass der die Anschlagsfläche definierende Abschnitt des Faltenbalgs durch das Spannmittel bzw. den Spannring abgestützt wird.

Die Erfindung betrifft ferner ein Lenkungssystem, welches eine Anordnung in einer der zuvor beschriebenen Ausführungsformen sowie ein Getriebe aufweist, um durch eine rotierende Lenkbewegung eine Verschiebebewegung der Lenkstange im Lenkgehäuse zu bewirken. Beispielsweise umfasst das Getriebe ein Ritzel und eine an der Lenkstange vorgesehene Verzahnung, die in Eingriff mit dem Ritzel steht.

Die Erfindung betrifft ferner eine aus den zuvor genannten Gründen vorteilhafte Verwendung des erfindungsgemäßen Lenkungssystems in einer der zuvor beschriebenen Ausführungsformen in einem Kraftfahrzeug.

Die Erfindung wird anhand der nachfolgenden Figur näher erläutert. Die Figur ist dabei nur beispielhaft zu verstehen und stellt lediglich eine bevorzugte Ausführungsvariante dar. Es zeigt:

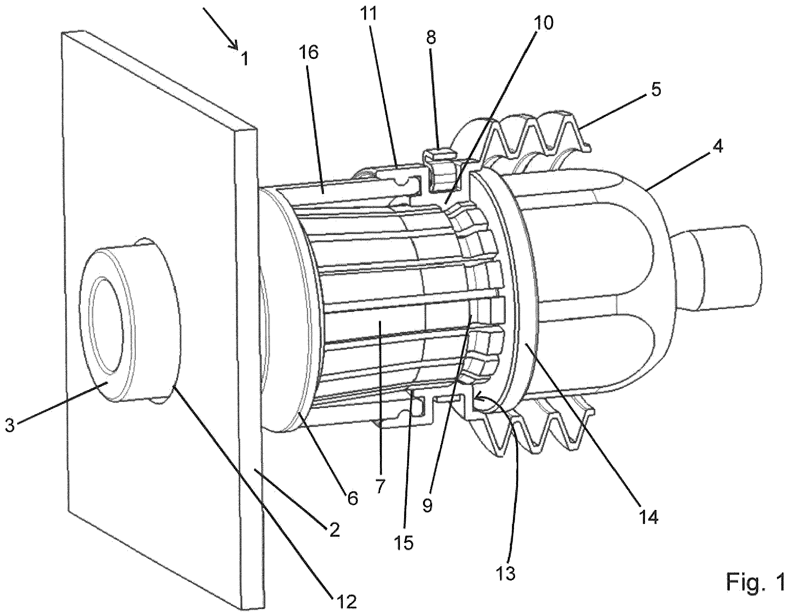

- Fig. 1: eine perspektivische Teilschnittansicht einer Ausführungsform der erfindungsgemäßen Anordnung.

Die Anordnung 1 umfasst ein Lenkgehäuse 2. Dieses ist hier symbolisch als Platte dargestellt, kann aber jede beliebige Gestaltung, beispielsweise eine Röhrenform aufweisen. Das Lenkgehäuse 2 weist einen Durchbruch 12 auf, in dem eine Lenkstange 3 den Durchbruch 12 durchgreifend verschiebbar angeordnet ist. Die Figur 1 zeigt lediglich einen Teilabschnitt dieser Lenkstange 3. Zur Lagerung der Lenkstange 3 ist ein Stützlager 6 aus Kunststoff vorgesehen. An dem Stützlager 6 sind um die Lenkstange 3 umlaufende Finger 7 ausgebildet, die radial nach innen gerichteten, elastischen Abstützung der Lenkstange 3 dienen und im Bereich ihres freien Endes an der Lenkstange 3 anliegen. Die Erstreckungsrichtung der Finger 7 ist um einige wenige Dekaden Grad angewinkelt zum Axialverlauf der Lenkstange 3. An der Lenkstange 3 ist ein Kugelgelenk 4 zur gelenkigen Verbindung der Lenkstange mit einem nicht dargestellten Lenkhebel vorgesehen. Zur äußeren Abdeckung der Lenkstange 3 und des Kugelgelenkes 4 ist ein Faltenbalg 5 aus Gummi vorgesehen. Der Faltenbalg 5 weist einen dem Lenkgehäuse 2 zugewandten Abschnitt auf, der an den Fingern 7 anliegt und zusammen mit dem den Faltenbalg 5 umgreifenden Spannring 8 für eine Vorspannung der Finger 7 sorgt. Zur Fixierung des Faltenbalgs 5 in axialer Richtung ist eine Formschlussverbindung zwischen dem Faltenbalg 5 und den Fingern 7 in Form einer umlaufenden äußeren Nut 9 auf dem Außenumfang der Finger 7 und einem darin eingreifenden ringförmig umlaufenden Vorsprung 10 im Innenumfang des Faltenbalgs 5 vorgesehen. Zur zusätzlichen Abdichtung weist der Faltenbalg eine Auskragung 11 auf, die auf einem hülsenförmigen Fortsatz 16 des Stützlagers 6 formschlüssig aufsitzt. Der Spannring 8 ist in einer umlaufenden Nut 15 des Faltenbalgs 5 eingelassen. Im Innenumfang des Faltenbalgs 5 ist eine die Lenkstange umlaufende, zum Axialverlauf der Lenkstange senkrecht ausgerichtete Anschlagsfläche 13 ausgebildet, die einen Anschlag für eine Auskragung 14 am Gehäuse des Kugelgelenks 4 darstellt. Der zur Anschlagsfläche 13 benachbart in der Nut 15 angeordnete Spannring 8 dient gleichzeitig der Abstützung der Anschlagsfläche 13, wobei das zwischen der Anschlagsfläche 13 und dem Spannring 8 vorgesehene Material des Faltenbalgs 5 der Anschlagsdämpfung dient.

## Patentansprüche

1. Anordnung der Lenkstange eines Kraftfahrzeugs (1) aufweisend: ein Lenkgehäuse (2); eine sich durch einen Durchbruch (12) im Lenkgehäuse (2) erstreckende Lenkstange (3); wenigstens ein im oder am Lenkgehäuse (2) angeordnetes Stützlager (6) zur verschiebbaren Lagerung der Lenkstange (3) im Durchbruch (12) des Lenkgehäuses (2); wenigstens einen elastischen Faltenbalg (5) zur äußeren Abdeckung der Lenkstange (3) im Bereich außerhalb des Lenkgehäuses (2), wobei das Stützlager (6) ferner Mittel (7) zur radial nach innen gerichteten, elastischen Abstützung der Lenkstange (3) aufweist, **dadurch gekennzeichnet, dass** die Mittel (7) durch den Faltenbalg (5) und/oder ein den Faltenbalg umgebendes Spannmittel (8) gegen die Lenkstange (3) vorgespannt werden.

2. Anordnung (1) gemäß dem vorhergehenden Anspruch, wobei die Mittel (7) zur radial nach innen gerichteten, elastischen Abstützung parallel oder schräg zum Axialverlauf der Lenkstange (3) verlaufende Finger aufweist.

3. Anordnung (1) gemäß einem der vorhergehenden Ansprüche, wobei das Stützlager (6) aus Kunststoff gefertigt ist.

4. Anordnung (1) gemäß einem der vorhergehenden Ansprüche, wobei das Stützlager (6) und die Mittel (7) zur radial nach innen gerichteten, elastischen Abstützung der Lenkstange (3) einstückig ausgebildet sind.

5. Anordnung (1) gemäß einem der vorhergehenden Ansprüche, wobei das Stützlager (6) und das Lenkgehäuse (2) einstückig ausgebildet sind.

6. Anordnung (1) gemäß einem der vorhergehenden Ansprüche, wobei das Spannmittel (8) ein Spannring, wie eine Ringfeder oder eine Spannschelle, ist.

7. Anordnung (1) gemäß einem der vorhergehenden Ansprüche, wobei die Mittel (7) zur radial nach innen gerichteten, elastischen Abstützung der Lenkstange (3) auch der Festlegung des Faltenbalgs (5) in axialer Richtung dienen.

8. Anordnung (1) gemäß einem der vorhergehenden Ansprüche, wobei der Faltenbalg (5) ferner eine Anschlagsfläche (13) zur Beanschlagung der Verschiebebewegung der Lenkstange (3) definiert.

9. Lenkungssystem aufweisend: eine Anordnung (1) gemäß einem der vorhergehenden Ansprüche sowie ein Getriebe, um durch eine rotierende Lenkbewegung eine Verschiebebewegung der Lenkstange (3) im Lenkgehäuse (2) zu bewirken, beispielsweise umfassend ein Ritzel und eine an der Lenkstange vorgesehene Verzahnung, die in Eingriff mit dem Ritzel steht.

10. Verwendung des Lenkungssystems nach dem vorhergehenden Anspruch in einem Kraftfahrzeug.

## Claims

1. An assembly of the steering rod of a motor vehicle (1), comprising: a steering housing (2); a steering rod (3) extending through an aperture (12) in the steering housing (2); at least one supporting bearing (6), which is disposed in or on the steering housing (2), for displaceably mounting the steering rod (3) in the aperture (12) of the steering housing (2); at least one elastic bellows (5) for externally covering the steering rod (3) in the region outside the steering housing (2), wherein the supporting bearing (6) further has means (7) for the radially inwardly directed, elastic support of the steering rod (3), **characterized in that** the means (7) are biased against the steering rod (3) by the bellows (5) and/or a clamping means (8) surrounding the bellows.

2. The assembly (1) according to the preceding claim, wherein the means (7) for the radially inwardly directed, elastic support have fingers extending parallel or obliquely to the axial extent of the steering rod (3).

3. The assembly (1) according to any one of the preceding claims, wherein the supporting bearing (6) is made from plastic.

4. The assembly (1) according to any one of the preceding claims, wherein the supporting bearing (6) and the means (7) for the radially inwardly directed, elastic support of the steering rod (3) are formed integrally.

5. The assembly (1) according to any one of the preceding claims, wherein the supporting bearing (6) and the steering housing (2) are formed integrally.

6. The assembly (1) according to any one of the preceding claims, wherein the clamping means (8) is a clamping ring, such as an annular spring or a fastening clamp.

7. The assembly (1) according to any one of the preceding claims, wherein the means (7) for the radially inwardly directed, elastic support of the steering rod (3) also serve for fixing the bellows (5) in the axial direction.

8. The assembly (1) according to any one of the preceding claims, wherein the bellows (5) further defines a stop surface (13) for stopping the displacement of the steering rod (3).

9. A steering system, comprising: an assembly (1) according to any one of the preceding claims and a transmission for causing, by means of a rotating steering movement, a displacement of the steering rod (3) in the steering housing (2), for example comprising a pinion and a toothed portion, which is engaged with the pinion, provided on the steering rod.

10. Use of the steering system according to the preceding claim in a motor vehicle.

## Revendications

1. Agencement (1) de la bielle de direction d'un véhicule automobile, comprenant: un boîtier de direction (2); une bielle de direction (3) s'étendant à travers une percée (12) ménagée dans le boîtier de direction (2); au moins un palier d'appui (6) agencé dans ou sur le boîtier de direction (2) et servant au support déplaçable de la bielle de direction (3) dans la percée (12) du boîtier de direction (2); au moins un soufflet élastique (5) destiné à recouvrir extérieurement la bielle de direction (3) dans la zone se trouvant à l'extérieur du boîtier de direction (2), ledit palier d'appui (6) présentant en outre des moyens (7) destinés à l'appui élastique orienté radialement vers l'intérieur de la bielle de direction (3), **caractérisé par le fait que** lesdits moyens (7) sont précontraints contre la bielle de direction (3) par l'intermédiaire du soufflet (5) et/ou par l'intermédiaire d'un moyen de tension (8) entourant le soufflet.

2. Agencement (1) selon la revendication précédente, dans lequel les moyens (7) destinés à l'appui élastique orienté radialement vers l'intérieur présentent des doigts s'étendant parallèlement à ou obliquement par rapport à l'allure axiale de la bielle de direction (3).

3. Agencement (1) selon l'une quelconque des revendications précédentes, dans lequel le palier d'appui (6) est réalisé en matière plastique.

4. Agencement (1) selon l'une quelconque des revendications précédentes, dans lequel le palier d'appui (6) et les moyens (7) destinés à l'appui élastique orienté radialement vers l'intérieur de la bielle de direction (3) sont réalisés d'un seul tenant.

5. Agencement (1) selon l'une quelconque des revendications précédentes, dans lequel le palier d'appui (6) et le boîtier de direction (2) sont réalisés d'un seul tenant.

6. Agencement (1) selon l'une quelconque des revendications précédentes, dans lequel ledit moyen de tension (8) est un anneau tendeur, tel qu'un anneau-ressort ou un collier tendeur.

7. Agencement (1) selon l'une quelconque des revendications précédentes, dans lequel les moyens (7) destinés à l'appui élastique orienté radialement vers l'intérieur de la bielle de direction (3) servent également à immobiliser le soufflet (5) dans la direction axiale.

8. Agencement (1) selon l'une quelconque des revendications précédentes, dans lequel le soufflet (5) définit en outre une surface de butée (13) pour la mise en butée du mouvement de déplacement de la bielle de direction (3).

9. Système de direction comprenant: un agencement (1) selon l'une quelconque des revendications précédentes ainsi qu'un engrenage pour provoquer, par un mouvement de direction rotatif, un mouvement de déplacement de la bielle de direction (3) dans le boîtier de direction (2), comprenant par exemple un pignon et une denture qui est prévue sur la bielle de direction et qui est en prise avec ledit pignon.

10. Utilisation du système de direction selon la revendication précédente, dans un véhicule automobile.
